# EUROPÄISCHE PATENTSCHRIFT

(11) **EP 1 518 653 B1**
(45) Veröffentlichungstag und Bekanntmachung des Hinweises auf die Patenterteilung: **31.10.2007**
(21) Anmeldenummer: 04104630.1
(22) Anmeldetag: 23.09.2004
(51) Int. Cl.: B29C 33/10

(54) **Sperrorgan für Entlüftungsbohrungen in Vulkanisationsformen sowie mit Sperrorganen versehene Vulkanisationsform**
Blocking members for vent bores in vulcanisation molds and vulcanisation mold provided with such blocking member
Organes de blocage pour les orifices d'éventation d'un moule de vulcanisation et moule comportant ces organes de blocage

(30) Priorität: 26.09.2003 DE 10344912
(43) Veröffentlichungstag der Anmeldung: 30.03.2005
(73) Patentinhaber: THE GOODYEAR TIRE & RUBBER COMPANY, Akron, Ohio 44316-0001 (US)
(72) Erfinder: Serener-Thielmann, Tayfun, 65199 Wiesbaden (DE)
(74) Vertreter: Kutsch, Bernd

(56) Entgegenhaltungen:
- EP-A- 1 314 526
- EP-A- 1 375 105
- DE-A1- 19 833 730
- DE-A1- 19 900 596

## Beschreibung

Die Erfindung betrifft ein Sperrorgan zum Einsatz in Entlüftungsbohrungen in Formen zur Herstellung technischer Gummiprodukte, insbesondere zur Herstellung von Fahrzeugreifen gemäß dem Oberbegriff des Patentanspruchs 1. Ferner ist die Erfindung auf eine Vulkanisationsform gerichtet, die mit derartigen Sperrorganen ausgestattet ist.

Sperrorgane dieser Art und gemäß dem Oberbegriff von Anspruch 1 und eine damit ausgerüstete Vulkanisationsform ist aus der DE 199 00 596 A1 bekannt. Dabei besteht jedes Sperrorgan aus einem in der jeweiligen Entlüftungsbohrung kraftschlüssig fixierbaren, stiftförmigen Zentralkörper, sowie einem mit dem Zentralkörper, verbundenen Abdichtteil, das einen forminnenseitig gelegenen Flächenbereich mit wenigstens einer Durchbrechung aufweist und zusammen mit der formseitigen Stirnfläche des Zentralkörpers einen im Anschluss an die Durchbrechung ausgeprägt abgewinkelten Strömungsweg für die Luft bildet. Diese bekannte Ausführungsform hat sich in der Praxis bewährt. Weitere Sperrorgane für Reifenvulkanisationsformen sind auch aus EP-A- 1375105, EP-A- 1314526 und DE-A- 19833730 bekannt.

Aufgabe der vorliegenden Erfindung ist es, die bekannten Sperrorgane hinsichtlich ihrer Dauerfunktionstüchtigkeit zu verbessern, und gleichzeitig eine kostengünstigere Herstellung zu ermöglichen.

Gelöst wird diese Aufgabe nach der Erfindung im Wesentlichen dadurch, dass das Sperrorgan einen in der jeweiligen Bohrung kraftschlüssig fixierbaren, rohrförmigen Hohlkörper mit einteilig angeformtem Abdichtteil umfasst, das das forminnenseitig gelegene Tellerelement aufweist, wobei das Tellerelement mit seinem Umfangsrand zumindest bereichsweise den Bohrungsdurchmesser der zugehörigen Entlüftungsbohrung überragt und an der Forminnenseite anliegt.

Durch die einteilige Ausgestaltung des Sperrorgans, insbesondere in Form eines Stanz-Biegeteils, lässt sich das Sperrorgan besonders kostengünstig herstellen, und es wird außerdem die Montage vereinfacht, was im Hinblick auf die große Anzahl der pro Vulkanisationsform erforderlichen Sperrorgane ebenfalls von wesentlicher Bedeutung ist. Wiederum als Folge der Einteiligkeit und der Gesamtgestaltung ist das Sperrorgan besonders unempfindlich gegen Ablagerungen während der Heizung, wodurch Verstopfungsgefahren praktisch beseitigt werden. Ferner wird durch die Ausgestaltung des Sperrorgans eine Unempfindlichkeit gegen Sand-, Laser- oder Trockeneis-Reinigung der mit den Sperrorganen versehenen Form erzielt.

Um den Einsetzvorgang der Sperrorgane in die Entlüftungsbohrungen der Vulkanisationsform besonders einfach zu gestalten, weist der Hohlkörper zur Schaffung einer radialen Elastizität zumindest einen im Wesentlichen in Axialrichtung verlaufenden Längsschlitz auf und er kann zu seinem von der Forminnenseite abgewandten Ende hin verjüngt ausgebildet sein.

Ein besonders fester und sicherer Sitz des Sperrorgans in der jeweiligen Entlüftungsbohrung wird vorzugsweise dadurch erreicht, dass der Hohlkörper zumindest eine in Umfangsrichtung verlaufende, wulstförmige Ausbauchung aufweist, die derart dimensioniert ist, dass beim Einsetzen des Hohlkörpers in die Bohrung die im Hohlkörper vorhandenen Axialschlitze geschlossen und die zumindest sich im Wesentlichen über den Umfang des Hohlkörpers erstreckende Ausbauchung unter Axialstreckung des Hohlkörpers komprimiert wird. Auf diese Weise können hohe Klemm-Haltekräfte erzeugt werden.

Zur Schaffung einer zusätzlichen Sicherheit gegen ein Herausziehen von Sperrorganen bei Entformungvorgängen kann der Hohlkörper an seiner Außenseite mit zumindest zwei einander vorzugsweise diametral gegenüberliegenden, entgegen der Auszugsrichtung wirksamen federnden Sperrkrallen versehen sein, die durch Herausdrücken aus dem Wandungsmaterial des Hohlkörpers auf einfache Weise realisierbar sind.

Die in der Tellerfläche des Sperrorgans vorgesehenen, einen Luftdurchtritt ermöglichenden Schlitzöffnungen werden bevorzugt durch einen Eindrückvorgang gebildet, bei dem das Material des Tellerelements in Schlitzlängsrichtung auf einem gewünschten Teilbereich reißt, wodurch definierte, enge Schlitzöffnungen gebildet werden, in denen sich im Regelfall kein Material festsetzt. Sollte jedoch im Ausnahmefall etwas Material durch den Spalt treten, dann wird dieses Material beim Entformen abgerissen und fällt in den Innenraum des Hohlkörpers, ohne nachfolgende Vulkanisationsvorgänge zu stören.

Nach einer Ausführungsvariante der Erfindung ist das Tellerelement hinsichtlich seiner Umfangskontur oval ausgebildet, wodurch ein Platz sparender Effekt erzielt wird und die einzelnen Sperrorgane besonders dicht nebeneinander angeordnet werden können.

Das erfindungsgemäße Sperrorgan besteht bevorzugt aus einem Stanz-Biegeteil, wobei der Hohlkörper von zwei zwischen sich Längsschlitze einschließenden Halbschalen gebildet ist und das Tellerelement über von den Halbschalen ausgehende Verbindungslaschen getragen ist, die einander diametral gegenüberliegen und zwischen randseitigen Einschnitten in die Tellerfläche übergehen. Stanz-Biegeteile dieser Art können mittels geeigneter Automaten in besonders wirtschaftlicher Weise exakt gefertigt werden.

Die Erfindung ist ferner gerichtet auf eine mit Sperrorganen der beschriebenen Art bestückte Vulkanisationsform zur Herstellung technischer Gummiprodukte.

Vorteilhafte Ausgestaltungen der Erfindung sind in den Unteransprüchen angegeben.

In der nachfolgenden Beschreibung wird die Erfindung an Hand eines Ausführungsbeispiels unter Bezugnahme auf die Zeichnung erläutert. In der Zeichnung zeigt:
Fig. 1 eine perspektivische Schrägansicht eines Sperrorgans einer Vulkanisationsform nach der Erfindung, und
Fig. 2 eine perspektivische Schräg-Unteransicht des Sperrorgans nach Fig. 1.

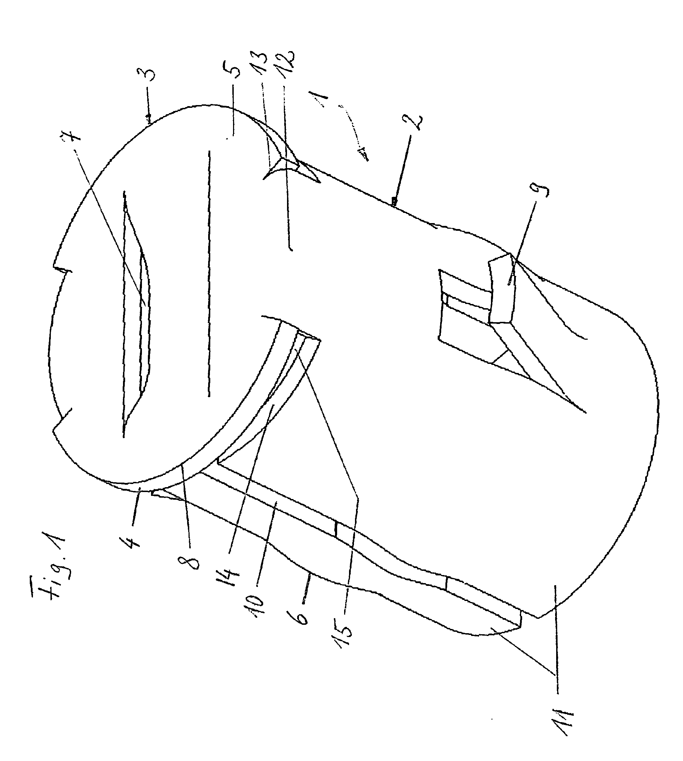

Fig. 1 zeigt ein aus einem Stanz-Biegeteil hergestelltes Sperrorgan 1, das von einem Hohlkörper 2 und einem mit diesen über Verbindungslaschen 12 verbundenen Abdichtteil 3 besteht.

Das Abdichtteil 3 wird von einem hinsichtlich seiner Umfangskontur kreisförmigen oder ovalen Tellerelement 4 gebildet, dessen Tellerfläche 5 eben ist und im dargestellten Ausführungsbeispiel zwei zueinander parallele Schlitzöffnungen 7 aufweist, die durch einen Eindrück- oder Stanzvorgang in der Tellerfläche 5 ausgebildet sind.

Dieser Eindrückvorgang wird dabei in der Weise vorgenommen, dass das Material des Tellerelements 4 unter Ausbildung vorgebbar schmaler randseitiger Schlitzöffnungen 7 reißt.

Das Abdichtteil 3 liegt im in die Entlüftungsbohrung der Vulkanisationsform eingesetzten Zustand über seinen Umfangsrand 8 an der Innenfläche der Vulkanisationsform an, wobei insbesondere bei ovaler Gestaltung des Tellerelements 4 noch Minimalschlitze zwischen dem Tellerelement 4 und der Bohrung in der Vulkanisationsform ausgebildet sein können, in denen sich praktisch kein Material festsetzen kann, die aber einen zusätzlichen Luftabtransport aus der Form gewährleisten.

Der in die jeweilige Entlüftungsbohrung einzusetzende Hohlkörper 2 besteht im dargestellten Ausführungsbeispiel aus zwei Halbschalen 11, die über die bereits erwähnten Verbindungslaschen 12 mit dem Abdichtteil 3 in Verbindung stehen. Zur Erleichterung des Einführens des Hohlkörpers 2 in die jeweilige Entlüftungsbohrung kann sich dieser Hohlkörper 2 zu seinem freien Ende hin verjüngen.

Zwischen den beiden Halbschalen 11 des Hohlkörpers 2 ist jeweils ein in Axialrichtung verlaufender Längsschlitz 10 ausgebildet, und in Umfangsrichtung des Hohlkörpers 2 verläuft zumindest eine Ausbauchung 6 nach Art eines Wulstes. Über diese Ausbauchung 6 findet zwischen dem Hohlkörper 2 und der Entlüftungsbohrung, in die der Hohlkörper 2 angesetzt wird, praktisch eine Klemm-Linienberührung statt, so dass bezüglich des Hohlkörpers 2 drei Funktionsabschnitte entstehen, nämlich ein unterer Einführbereich, ein vorzugsweise im mittleren Teil gelegener Klemmbereich und ein oberer Tragebereich für das Ventilelement, das die für die Funktion wichtige 90°-Luftumlenkung bewirkt.

Da aufgrund der Ausgestaltung des Hohlkörpers 2 beim Einführen des Sperrorgans 1 in die entsprechende Entlüftungsbohrung keinerlei Verbiegegefahr besteht, können für das Sperrorgan relativ geringe Materialstärken verwendet werden. Trotzdem ergeben sich in der Entlüftungsbohrung hohe Haltekräfte, was insbesondere eine Folge davon ist, dass beim Einführen des Sperrorgans in die Entlüftungsbohrung aufgrund der vorhandenen Ausbauchung 6 zunächst die Längsspalte 10 geschlossen werden, und dann dieser von der Ausbauchung 6 gebildete Wulst durch Streckung des Hohlkörpers 2 in Axialrichtung in Funktion tritt und die angestrebten hohen Haltekräfte erzeugt.

Zusätzlich kann das Sperrorgan 1 gegen ein Herausziehen aus den Entlüftungsbohrungen bei den jeweiligen Entformungsvorgängen durch Sperrkrallen 9 gesichert werden, die aus dem Material des Hohlkörpers 2 laschenartig herausgedrückt werden und entgegen der Auszugsrichtung durch Verkrallen mit der Innenwand der Entlüftungsbohrung wirksam werden.

Die freie Beweglichkeit der Halbschalen 11 in Radialrichtung beim Einführen in die Entlüftungsbohrung wird durch die Spalte 15 ermöglicht, die zwischen der forminnenseitig gelegenen Stirnfläche des Hohlkörpers und dem Abdichtteil vorliegen. Die Verbindungslaschen zwischen dem Hohlkörper 2 und dem Abdichtteil 3 gehen über Einschnitte 13 in das Tellerelement 4 über.

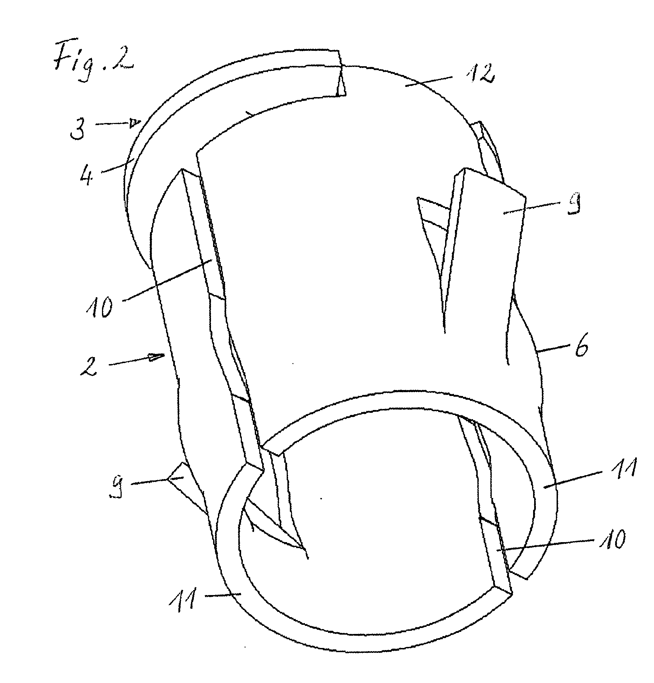

Die in Fig. 2 gezeigte perspektivische Schrägansicht von unten lässt die bereits im Zusammenhang mit Fig. 1 erläuterten Komponenten des erfindungsgemäßen Sperrorgans und vor allem die beiden Halbschalen 11 des Hohlkörpers 2 deutlich erkennen. Dabei ist auch ersichtlich, dass die beiden einander diametral gegenüberliegenden Sperrkrallen 9 in dem Bereich des Hohlkörpers 2 ausgebildet sind, in dem sich auch die Ausbauchung 6 befindet. Die Länge der Sperrkralle 9 und ihre Abwinklung bezüglich der Längsachse des Hohlkörpers 2 wird so gewählt, dass der angestrebte Verkrallungseffekt auch unter Berücksichtigung der Umfangsverringerung des Hohlkörpers 2 durch Schließen der Längsschlitze 10 beim Einführen des Sperrorgans in die jeweilige Entlüftungsbohrung gewährleistet ist.

## Patentansprüche

1. Sperrorgan zum Einsatz in Entlüftungsbohrungen in Formen zur Herstellung technischer Gummiprodukte, insbesondere zur Herstellung von Fahrzeugreifen, mit einem forminnenseitig gelegenen Tellerelement (4), das in seiner Tellerfläche (5) mit wenigstens einer Schlitzöffnung (7) versehen ist, **dadurch gekennzeichnet, dass** das Sperrorgan (1) einen in der jeweiligen Bohrung kraftschlüssig fixierbaren, rohrförmigen Hohlkörper (2) mit einteilig angeformtem Abdichtteil (3) umfasst, das das forminnenseitig gelegene Tellerelement (4) aufweist, wobei das Tellerelement (4) mit seinem Umfangsrand (8) zumindest bereichsweise den Bohrungsdurchmesser der zugehörigen Entlüftungsbohrung überragt und an der Forminnenseite anliegt.

2. Sperrorgan nach Anspruch 1, **dadurch gekennzeichnet, dass** der Hohlkörper (2) zur Schaffung einer radialen Elastizität zumindest einen insbesondere im Wesentlichen axial verlaufenden Längsschlitz (10) aufweist.

3. Sperrorgan nach Anspruch 1 oder 2, **dadurch gekennzeichnet, dass** der Hohlkörper (2) zu seinem von der Forminnenseite abgewandten Ende hin verjüngt, insbesondere konisch verjüngt ausgebildet ist, und/oder dass der Hohlkörper (2) zumindest eine in Umfangsrichtung verlaufende Ausbauchung (6) aufweist.

4. Sperrorgan nach Anspruch 3, **dadurch gekennzeichnet, dass** die Ausbauchung (6) etwa ringförmig gestaltet ist und sich zumindest im Wesentlichen über den Umfang des Hohlkörpers (2) erstreckt.

5. Sperrorgan nach Anspruch 3 oder 4, **dadurch gekennzeichnet, dass** die Ausbauchung (6) derart dimensioniert ist, dass beim Einsetzen des Hohlkörpers (2) in die Entlüftungsbohrung im Hohlkörper (2) vorhandene Längsschlitze (10) geschlossen und die Ausbauchung (6) unter Streckung des Hohlkörpers (2) komprimiert wird.

6. Sperrorgan nach mindestens einem der vorhergehenden Ansprüche, **dadurch gekennzeichnet, dass** der Hohlkörper (2) an seiner Außenseite zumindest zwei einander insbesondere diametral gegenüberliegende, entgegen der Auszugsrichtung wirkende, federnde Sperrkrallen (9) aufweist.

7. Sperrorgan nach mindestens einem der vorhergehenden Ansprüche, **dadurch gekennzeichnet, dass** das Tellerelement (4) eben und hinsichtlich seiner Umfangskontur kreisförmig oder oval ausgebildet ist, und/oder dass in der Tellerfläche (5) zumindest zwei durch einen Eindruckvorgang gebildete Schlitzöffnungen (7) vorgesehen sind.

8. Sperrorgan nach einem der vorhergehenden Ansprüche, **dadurch gekennzeichnet, dass** das Sperrorgan (1) aus einem Stanz-Biegeteil besteht, wobei der Hohlkörper (2) von zwei zwischen sich Längsschlitze (10) einschließenden Halbschalen (11) gebildet ist und das Tellerelement (4) über von den Halbschalen (11) ausgehende Verbindungslaschen (12) getragen ist, die einander insbesondere diametral gegenüberliegen und zwischen randseitigen Einschnitten (13) in die Tellerfläche (5) übergehen.

9. Sperrorgan nach mindestens einem der vorhergehenden Ansprüche, **dadurch gekennzeichnet, dass** zwischen dem Tellerelement (4) und der tellerseitigen Stirnfläche (14) des Hohlkörpers (2) in den neben den Verbindungslaschen (12) gelegenen Bereichen ein Spalt (15) ausgebildet ist.

10. Vulkanisationsform zur Herstellung technischer Gummiprodukte, insbesondere zur Herstellung von Fahrzeugreifen, mit einer Vielzahl von Entlüftungsbohrungen, in denen jeweils ein das Eindringen von Rohlingsmaterial zumindest im Wesentlichen blockierendes und gleichzeitig eine Luftabfuhr ermöglichendes Sperrorgan angebracht ist, **dadurch gekennzeichnet, dass** das Sperrorgan nach einem oder mehreren der Ansprüche 1 bis 9 ausgebildet ist.

## Claims

1. Blocking member for the use in vent bores in molds for the manufacture of technical rubber products, in particular for the manufacture of vehicle tyres, with a plate element (4) disposed at the inner side of the mold, which is provided in its plate surface (5) with at least one slot opening (7), **characterized in that** the blocking member (1) has a tubular hollow body (2) which can be fixed in force-transmitting manner in the respective bore, the hollow body (2) having a sealing part (3) formed thereon in one piece with it, the sealing part comprising the plate element (4) disposed at the inner side of the mold, wherein the peripheral rim (8) of the plate element (4) projects at least regionally beyond the bore diameter of the associated vent bore and contacts the inner side of the mold.

2. Blocking member in accordance with claim 1, **characterized in that** the hollow body (2) has at least one elongate slot (1), in particular at least one substantially axially extending elongate slot (10) to provide a radial elasticity.

3. Blocking member in accordance with claim 1 or claim 2, **characterized in that** the hollow body (2) tapers, in particular conically tapers, towards its end remote from the inner side of the mold, and/or that the hollow body (2) has at least one bulge (6) extending in peripheral direction.

4. Blocking member in accordance with claim 3, **characterized in that** the bulge (6) is approximately of ring-like shape and extends at least substantially over the periphery of the hollow body (2).

5. Blocking member in accordance with claim 3 or 4, **characterized in that** the bulge (6) is dimensioned such that on inserting the hollow body (2)into the vent bore the longitudinal slots (10) present in the hollow body (2) are being closed and the bulge (6) is compressed with elongation of the hollow body (2).

6. Blocking member in accordance with at least one of the preceding claims, **characterized in that** the hollow body (2) has at its outer side at least two, in particular diametrically oppositely disposed spring claws (9) which act opposite to the pull-out direction.

7. Blocking member in accordance with at least one of the preceding claims, **characterized in that** the plate element (4) is flat and is of circular or oval shape with respect to its peripheral contour, and/or that at least two slot openings (7) formed by a pressing in process are provided in the plate surface (5).

8. Blocking member in accordance with any one of the preceding claims, **characterized in that** the blocking member (1) consists of a stamped and bent part with the hollow body (2) being formed by two half shells (11) which include longitudinal slots (10) between them and **in that** the plate element (4) is supported by connecting lugs (12) which start from the half shells (11) and which lie in particular diametrically opposite to one another and merge into the plate surface (5) between cuts (13) provided in the rim.

9. Blocking member in accordance with any one of the preceding claims, **characterized in that** a gap (15) is formed between the plate element (4) and the plate side end face (14) of the hollow body (2) in the regions disposed adjacent to the connecting lugs (12).

10. Vulcanisation mold for the manufacture of technical rubber products, in particular for the manufacture of vehicle tyres, having a plurality of vent bores, in each of which a blocking member is mounted which at least substantially blocks the penetration of blank material and simultaneously enables an extraction of air, **characterized in that** the blocking member is formed in accordance with one or more of the claims 1 to 9.

## Revendications

1. Organe d'obturation destiné à venir s'insérer dans des alésages de purge dans des moules pour la fabrication de produits industriels en caoutchouc, en particulier pour la confection de bandages pneumatiques pour des véhicules automobiles, comprenant un élément en forme d'assiette (4) disposé à l'intérieur du moule, qui est muni d'au moins une ouverture (7) en forme de fente dans sa surface (5) en forme d'assiette, **caractérisé en ce que** l'organe d'obturation (1) comprend un corps creux (2) de forme tubulaire sur lequel est rapportée une partie (3) assurant l'étanchéité réalisée en une seule pièce, apte à venir se fixer via une liaison à force dans l'alésage respectif et qui présente l'élément en forme d'assiette (4) disposé à l'intérieur du moule, l'élément en forme d'assiette (4) dépassant, avec son bord périphérique (8) au moins localement le diamètre de l'alésage de purge correspondant et venant s'appliquer contre l'intérieur du moule.

2. Organe d'obturation 1, **caractérisé en ce que** le corps creux (2) pour l'obtention d'une élasticité radiale présente au moins une fente longitudinale (10) s'étendant en particulier essentiellement en direction axiale.

3. Organe d'obturation 1 ou 2, **caractérisé en ce que** le corps creux (2) se rétrécit en direction de son extrémité qui se détourne de l'intérieur du moule, en particulier est réalisé en une configuration conique et/ou **en ce que** le corps creux (2) présente au moins un évasement (6) s'étendant en direction périphérique.

4. Organe d'obturation 3, **caractérisé en ce que** l'évasement (6) est réalisé de manière approximativement annulaire et s'étend au moins de manière essentielle sur la périphérie du corps creux (2).

5. Organe d'obturation 3 ou 4, **caractérisé en ce que** l'évasement (6) est dimensionné de telle sorte que, lors de l'insertion du corps creux (2) dans l'alésage de purge, les fentes longitudinales (10) présentes dans le corps creux (2) se ferment et l'évasement (6) se comprime lors de l'étirement du corps creux (2).

6. Organe d'obturation selon au moins une des revendications précédentes, **caractérisé en ce que** le corps creux (2) présente, sur son côté externe, au moins deux griffes élastiques d'obturation (9) opposées l'une à l'autre, de préférence opposées l'une à l'autre en direction diamétrale, agissant dans le sens contraire à la direction d'extraction.

7. Organe d'obturation selon au moins une des revendications précédentes, **caractérisé en ce que** l'élément en forme d'assiette (4) est plat et de forme circulaire ou ovale en ce qui concerne son contour périphérique, et/ou **en ce qu'**on prévoit, dans la surface en forme d'assiette (5) au moins deux ouvertures en forme de fentes (7) que l'on obtient via un processus d'impression.

8. Organe d'obturation selon l'une quelconque des revendications précédentes, **caractérisé en ce que** l'organe d'obturation (1) est constitué par une pièce pliée obtenue par estampage, le corps creux (2) étant formé par deux demi-coquilles (11) entre lesquelles viennent s'insérer des fentes longitudinales (10), et l'élément en forme d'assiette (4) est supporté via des pattes de liaison (12) s'étendant à partir des demi-coquilles (11), les pattes de liaison étant opposées l'une à l'autre, en particulier étant opposées l'une à l'autre en direction diamétrale, et se transformant pour obtenir la surface (5) en forme d'assiette, entre des entailles marginales (13).

9. Organe d'obturation selon au moins une des revendications précédentes, **caractérisé en ce que**, entre l'élément en forme d'assiette (4) et la surface frontale (14) du corps creux (2) côté assiette, est réalisé un espace libre (15) dans les zones situées à proximité des pattes de liaison (12).

10. Moule de vulcanisation pour la fabrication de produits industriels en caoutchouc, en particulier pour la confection de bandages pneumatiques pour véhicules automobiles, comprenant une multitude d'alésages de purge dans lesquels est monté respectivement un organe d'obturation bloquant au moins de manière essentielle la pénétration de matière brute et permettant simultanément une évacuation de l'air, **caractérisé en ce que** l'organe d'obturation est réalisé conformément à une ou plusieurs des revendications 1 à 9.
